# EUROPEAN PATENT APPLICATION

(11) **EP 1 522 226 A1**
(43) Date of publication of application: **13.04.2005**
(21) Application number: 03447241.5
(22) Date of filing: 01.10.2003
(51) Int. Cl.: A23L 1/212, A23P 1/08, A23B 7/16, A23B 7/04, A23L 3/36, A23L 3/365

(54) **Frozen fruit discs**

(71) Applicant: dirafrost F.F.I. n.v., 3540 Herk-de-Stad (BE)
(72) Inventor: Stulens, Els, 3010 Leuven (BE)
(74) Representative: Van Malderen, Joelle

(57) **Abstract**

The present invention is related to frozen or deep-frozen fruit products that have the shape and dimensions of the food product on which to apply the fruit product directly in its frozen state, the fruit product being coated with a powder layer able to avoid juice leaking from said fruits or fruit pieces and to prevent loss of shape, form and stability. The present invention in particular relates to coated strawberry discs or rings ready to use on pies.

The invention is also related to the preparation process of said frozen fruit products and to their use for the preparation of a fruit composition.

## Description

### Field of the invention

The present invention is related to frozen or deep-frozen fruit products, especially frozen and coated strawberry discs, which can be placed directly i.e. in frozen state on top of pastry such as pies and which upon thawing will not leak their juice. Advantageously, the frozen fruit product of the present invention has the same shape, form and dimensions as the food product on which it will be applied. The present invention further relates to the preparation process of said discs of frozen fruit and to their use in various food preparations.

### Background of the invention and state of the art

Usually, for various food applications, such as strawberry pie, only fresh strawberries are used, because when frozen strawberries are thawed, they tend to lose their juice, due to a broken cell structure by freezing. This characteristic is inherent to the structure of the fruit itself. When they lose their juice the pie becomes wet and the fruits slip off the pie.

However, fresh strawberries are only available during harvest periods. They have to be washed, destalked and cut in half before they can be used on a fruit preparation such as a pie.

On the other hand, frozen fruits or fruit products are available during the whole year and are easier to handle. They can be used directly, especially on pastry, such as a pie, covered thereafter with glazing gel. Once thawed, they are ready for consumption.

However, when the fruit is thawing, the juice is captured by said glazing gel which results in an organoleptically unpleasant gel. Further, leaking juice can soak the pastry underneath it. Therefore, frozen fruits are in practice not used for this purpose due to the leaking of juice and the consequences thereof for a food composition.

Several documents describe special techniques for freezing foodstuff and more particularly fruit such as strawberries.

JP 57091150-A describes a method for freezing strawberries which comprises smearing fresh strawberries with high amounts of powdery saccharides such as sugar together with a thickener such as xanthan gum. The saccharides are applied in high amounts (from 5 to 50 weight%, preferably between 20 and 40 weight%), leading to a sticky, sweet and unattractive mixture after thawing.

EP-A-512274 also describes a method for conserving strawberries in which high concentrations (2 to 50, preferably 25 to 40 weight%) of sugar.

US 4,713,252 describes a method for conserving fruit comprising the step of mixing fresh or frozen fruit with sugar syrup in a tumbler, with as result the lowering of the fruit's water activity while augmenting the sugar content. 16 to 50 weight % sugar is used. Result of the method is dried sweetened fruit, which needs to be rehydrated if one wishes to use it in stead of fresh fruit in a fruit preparation.

Other documents such as JP 5506054-A and GB 2100575 describe methods for improving preservation by coating with a preserving agent such as ascorbic acid.

The problem of leaking upon thawing has been solved in EP-A-1228703, wherein a method is described for efficiently freezing of fruits or fruit pieces, whereby the fruits such as strawberries are coated with a powder prior to freezing.

Frozen strawberries per se, even those frozen according to the method of EP-A-1228703, still do not meet all the demands of the market. People are often so very busy that they do not have time to start arranging themselves fruit pieces on a cake or pie. They prefer to have a ready to use product, available in their fridge, which they can use at any time (summer-winter, late at night etc.), which they just have to put on top of a pie and which will results in a dessert that looks and tastes like a home-made product with which they can surprise and even impress their families and/or guests.

Some ready to use discs of fruits have been put on the market: fresh strawberry discs, deep-frozen apple discs and Deco raspberries in ring-form which are frozen onto pulp plates. These products do not meet all of the above requirements. Fresh fruit discs such as strawberry discs will not be available throughout the year and can not be stored for a longer time. There are frozen fruit rings on the market such as apple and raspberry rings. There are, however, no ready to use frozen fruit rings available to the customer made of fruits with high water content which will not start leaking upon thawing, which do not contain unwanted materials such as pulp plates and which just need to be placed on top of e.g. a pie to prepare a dessert, e.g. a fruit pie of excellent quality.

None of the above prior art methods and/or products can provide a frozen fruit product with all of the desired characteristics for a busy customer that stands to excellent quality and taste.

### Aims of the invention

The present invention aims to provide frozen or deep-frozen fruit products, e.g. fruit rings or discs, preferably with the shape and/or dimensions (diameter) of the food product and/or the composition on which it will be placed, preferably in its frozen state, whereby the fruits will not start leaking juice upon thawing and whereby the fruit product keeps its shape and stability.

The present invention further aims to provide frozen or deep-frozen coated strawberry discs.

Another aim of the present invention is to provide a preparation process of said frozen or deep-frozen fruit products and to demonstrate the use of said frozen fruit products on food products and/or compositions such as pies.

### Summary of the invention

The present invention is related to frozen or deep-frozen fruit discs with a fruit bottom formed by or comprising fruit slices, which preferably overlap, said slices being coated with between 0.05 and 5 weight% of a stabilising layer and/or coating powder; and preferably on top of said bottom a fruit top layer formed by fruit parts or pieces which may be fruit slices or fruit halves or formed by whole fruits. The stabilising layer and/or coating powder are applied to avoid juice leaking from said fruit or fruit pieces when thawing. The stabilising layer and/or coating powder further prevent loss of shape, form and/or stability through adhesion. The stabilising agents take care of the "water-management" and will bind water coming out of the fruit pieces. The fruit discs of the invention do not contain unwanted materials such as a pulp plate. The fruit discs of the invention are also referred to as frozen fruit products or fruit compositions.

In the case of rectangular fruit products, fruit products made of one or more layers of, preferably overlapping, slices were found to keep their shape and form.

The advantage of a fruit disc as described above is that it retains its shape, form and/or stability during and after thawing and that no or almost no fruit juice leaks.

A preferred fruit is strawberry but it may as well be any other fruit.

Preferably a single layer of fruit slices is used in the bottom layer and a single layer of fruit parts or fruits in the top layer. Possibly more than one layer is used in the top and/or bottom layer.

In a preferred embodiment of the invention, the fruit parts used for the top layer are fruit halves.

In an embodiment of the invention, these fruit halves are put with their sliced or cut part downwards. Alternatively, the fruit halves may be put with their upper part or their lower part downwards, i.e. fruits are not laying but standing on top of the fruit bottom.

Preferably, between 0.5 and 2 weight % and advantageously about 1 to 2 weight % of stabilising layer and/or coating powder is applied.

Advantageously, said stabilising layer and/or coating powder comprises a mixture of stabilising and gelling agents, preferably made of modified starch, pectins, fructans (such as levan or inulin), edible gums (guar gum, xanthan gum, locust bean gum, gelan gum, ...) having advantageous gelling properties.

Advantageously, said stabilising layer and/or coating powder is used together with other additives, colouring agents, food grade acids flavours, etc known in the art.

A preferred embodiment of the present invention is related to a frozen or deep-frozen fruit disc in the form of a ring, preferably with a standard pastry or pie dimensions.

In the present context, the term "disc" includes rings but also other forms. The frozen or deep-frozen fruit products and/or compositions of the invention do not necessarily need to have the form of a ring. Other preformed shapes such as cubes, rectangulars etc. are possible, these formats preferably corresponding more or less exactly to a standard shape of a food product on which to put the frozen fruit product.

Preferably, fresh strawberries, and advantageously fresh strawberry pieces prepared from healthy and ripe non-fermented fruits are used to prepare the frozen fruit product of the invention. If needed, the fruit is cleaned, destalked and/or washed before use. Fruit pieces are meant to include slices but also halves of strawberries and are further often referred to as "fruit material". The steps of picking the right fruits, washing and/or cleaning them, possibly destalking and/or stoning them followed by preparing suitable fruit pieces or parts and/or slices are included under the "preparation" of the fruits. Ordering and/or arranging said fruits and/or fruit pieces in any desired way such as ordering and/or arranging them so that they partially overlap is referred to as "arranging" of the fruit material. The arranged fruits and/or fruits pieces in the pie ring and/or other suitable form or shape are referred to as the fruit mass. The "preparation of fruits" can further include the individual freezing of whole fruits and/or fruit pieces, which possibly are individually coated with a stabilising layer and/or coating powder prior to freezing.

The present invention is exemplified for strawberries but is not limited to frozen strawberry products. It should be clear that the invention is equally well applicable to other fruits with high water content such as for instance raspberries. The preparation method of the present invention is further also applicable to fruits with lower water content.

In a preferred embodiment of the present invention only strawberries are used. It is not excluded, however, to use at least two types of fruits, i.e. strawberries and at least one other type of fruit, preferably fruits with comparable water contents and/or fruits or for instance nuts or pieces thereof that fit in free spaces of the fruit top layer.

In a preferred embodiment of the present invention, fresh fruits and/or fresh fruit pieces are ordered and/or arranged and a bottom of fruit material is, preferably manually, formed in for instance a round plate or form such as a pie ring. The coating powder is preferably applied on the fruit mass of the first layer(s) (e.g. the fruit bottom), but may also be applied to the bottom or the whole of the final fruit product to be frozen. One can for instance use a powder disperser to apply the coating powder and/or stabilizing agent. Other ways of applying are known to a person skilled in the art.

Another aspect of the present invention is related to the preparation process or method of said frozen or deep-frozen fruit products.

A preferred preparation process comprises the following steps:
- Preparation of the fruit material, preferably fresh fruit material and advantageously fresh strawberry slices and halves
- Arranging, preferably manually, of the fruits to form a first layer of fruits (called fruit bottom) with fruit slices, preferably with overlapping slices, in a suitable form such as a round pie form
- Dispersal of a stabilising layer and/or coating powder on the thus obtained fruit mass, preferably with a powder disperser
- Putting another layer of fruits (called top layer), preferably fruit halves, on top of the first layer of fruit
- Freezing, preferably block freezing of the preformed fruit mass, preferably at -40°C
- Optionally, powdering the bottom of said frozen preformed fruit mass with a stabilising layer and/or coating powder followed by packing
- Storage of the thus obtained frozen fruit product and/or fruit composition, preferably at -20°C.

In a preferred embodiment of the invention the freezing system used is a freezing tunnel, preferably a standard spiral froster with air blast. The storage period of the obtained product and/or composition at deep-freeze temperatures of about -20 C° can reach up to two years.

Advantageously, the products and/or compositions of the invention are packed individually for instance in sterile plastic or aluminium plates or in bags, which further may be placed in a cardboard box.

Advantageously, said preparation process could be adapted in order to be integrated in a classical "industrial" process for the preparation of a food product and/or composition which may require the addition of other elements in the powder layer such as food grade acids (citric acid, ascorbic acid, ...), food colours and specific flavours.

Usually, the amount of the specific coating powder layer used in said process varies from about 1% to about 2% in weight of the final obtained product (the total being 100%) in weight.

The frozen or deep-frozen fruit products and/or compositions of the present invention can be- placed directly, in frozen state, on a food product of choice such as a pie or an ice cake. The pie may be a fresh pie or a precooked pie. The products of the invention are as such highly suited to prepare in a short time frame and at any time a food product with all the aspects of a nice and tasty home-made food product.

If the customer desires so, he can finish his dessert and give it a personal touch by, for instance, adding a glazing gel, by adding whipped cream or by dispersing icing sugar on the crust of the pie etc.

The present invention will be described in more details in the following example or preferred embodiment, in reference to the enclosed figure(s). A schematic flow chart of the various steps used in the method according to the invention.

### Brief description of the figures

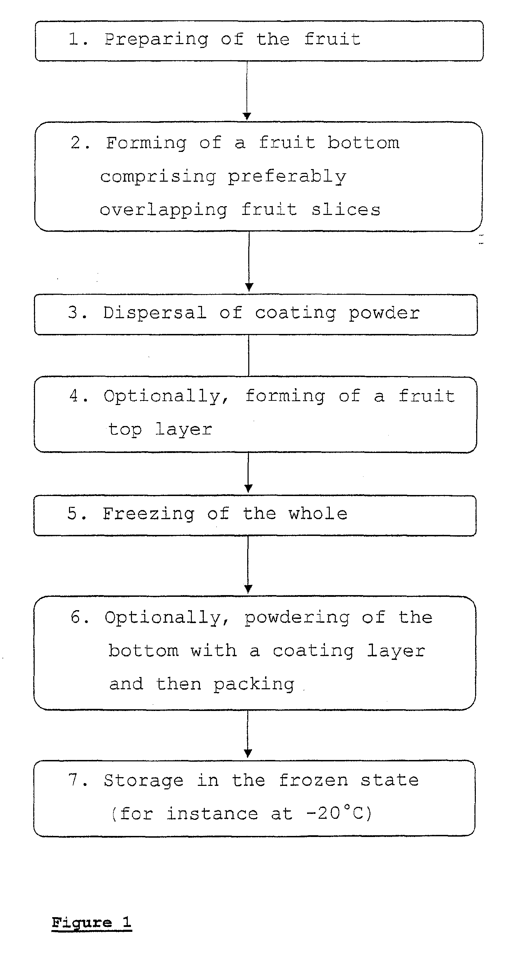

Figure 1 represents a schematic flow chart of the various steps used in the method according to the invention.

### Detailed description of the invention

### Ingredients

The ingredient fruits, in this particular case strawberries, are selected during their harvest season according to their taste, their colour, their size and are, if so desired, cut up in pieces and/or slices of an appropriate size.

The coating powder according to the invention is composed of a mixture of stabilising agents and possibly flavours.

Said stabilising agents take care of the "water-management" and are allowed to bind the water coming out of the fruit pieces and are a major factor to the success of the obtained frozen fruit product and/or composition.

The juice coming out of the thawing fruit is absorbed by the stabilisers, which advantageously hydrates and forms a gel. The fruit will keep its shape in the gel layer. Said gel has advantageously a smooth texture in order to give a nice mouthfeel. The stabilising agents need to avoid syneresis after thawing. The stabilising agents have to be freeze-thaw stable and acid stable in order to allow the formation of a gel. Further, also a nice surface gloss is desirable.

Preferably, said mixture of stabilisers are made of modified starch and edible gums. Other ingredients such as food grade acids (citric acid, ascorbic acids), food colours and flavours can be also added to said coating powder. A preferred composition is presented in the following **table 1**:

| **Frozen fruit:** | |
|---|---|
| Strawberry halves | 100,0 kg |

| **Powder mixture:** | |
|---|---|
| Modified starch | 0,8 kg |
| Guar gum | 0,27 kg |
| Xanthan gum | 0,05 kg |
| Flavour | 0,05 kg |

The preparation process is preferably executed according to the flow chart presented in figure 1. Briefly, the process comprises the following steps:
1. Preparing the fruit
2. Forming of a fruit bottom
3. Dispersal of coating powder and/or layer thereon
4. Forming of a fruit top layer
5. Freezing of the whole
6. Optionally, powdering of the bottom and packing
7. Storage in the frozen state (at -20°C)

In said process, the fruit product is formed in a way to have the form and dimensions of the food product on which to place the fruit product directly in its frozen state.

In said process, the coating powder will be dispersed on the fruit surface, preferably by using a powder disperser, to form a thin powder layer which will freeze around the fruit pieces, thus forming a coating layer on the fruit pieces.

The low temperature will result in an improved coating of the fruits and will guarantee also the microbiological stability of the obtained preparation.

The fruit ring or disc can thereafter be put on for instance a pie (possibly filled with a cream) in its frozen state, a glazing gel can be put on top of it, and when the fruits are thawed, the pie will be ready for consumption.

The fruits obtained with the process according to the invention meet the aims of the invention.

In general, the following ranges, as indicated in the following **table 2,** apply for obtaining an acceptable product according to a preferred embodiment of the invention:

| **Frozen fruit:** | |
|---|---|
| Strawberry halves | 100,0 kg |

| **Powder mixture:** | |
|---|---|
| Modified starch | 0,5 - 1,5 kg |
| Guar gum | 0,05 - 0,5 kg |
| Xanthan gum | 0,05 - 0,5 kg |
| Flavour | 0,05 - 0,5 kg |
| Ascorbic acid | 0,05 - 0,5 kg |

## Claims

1. A frozen or deep-frozen fruit disc with a fruit bottom formed by fruit slices, said slices being coated with between 0.05 and 5 weight% of a stabilising layer and/or coating powder; and preferably on top of said bottom a fruit top layer formed by fruit parts or whole fruits, wherein the stabilising layer and/or coating powder avoids juice leaking from said fruit when thawing and prevents loss of shape, form and/or stability.

2. The fruit disc according to claim 1 wherein the fruit slices partially overlap.

3. The fruit disc according to any of the preceding claims wherein the fruit top layer is formed by fruit halves.

4. The fruit disc according to any of the preceding claims which is frozen as a whole in a format suitable for direct use.

5. The fruit disc according to claim 4, wherein said format has the form of a pie ring.

6. The fruit disc according to any of the preceding claims coated with between 0.5 weight% and 2 weight% of a coating powder layer.

7. The fruit disc according to any of the preceding claims coated with between 1 weight% and 2 weight% of a coating powder layer.

8. The fruit disc according to any of the preceding claims wherein also the fruits parts of the top layer and/or the bottom of the fruit disc or coated with said coating powder and/or stabilizing layer.

9. The fruit disc according to any of the preceding claims wherein said coating powder comprises a mixture of stabilising agents.

10. The fruit disc according to any of the preceding claims wherein said coating powder is a mixture of stabilising and gelling agents selected from the group consisting of modified starch, pectines, fructans and edible gums having gelling properties.

11. The fruit disc according to any of the preceding claims wherein the coating powder and/or stabilizing layer further comprises one or more additive(s) selected from the group consisting of colouring agents, food grade acids or flavours.

12. The fruit disc according to any of the preceding claims wherein said fruits are fresh fruits.

13. The fruit disc according to any of the preceding claims wherein the fruits are strawberries.

14. The fruit disc according to any of the preceding claims made of strawberries and at least one other type or fruit or nuts.

15. Preparation process for the fruit disc according to any of the preceding claims, said process comprising the steps of:
- preparing of the fruit
- forming of a first layer of fruit slices to form a bottom of fruits in a desired shape or format
- dispersal of a coating powder on the obtained fruit layer
- forming a top layer of fruits, preferably with fruit halves
- freezing of the thus obtained fruit disc
- optionally, dispersal of a coating powder on the obtained frozen fruit disc followed by packing
- storage in a frozen state

16. The process according to claim 15 wherein the freezing step involves block freezing preferably in a freezing tunnel.

17. The process according to any of claims 15 or 16 wherein said coating powder is dispersed with a powder disperser.

18. The process according to any of claims 15 to 17 wherein the obtained fruit disc is stored at -20°C.

19. A frozen fruit disc obtainable by a method according to any of claims 15 to 18.

20. Use of a frozen fruit disc according to any of the preceding claims 1 to 14, or obtained according to the method of claims 15 to 18 in a food composition.

21. Use according to claim 20 wherein said food composition is pastry.

22. Use according to claim 21 wherein said pastry is a pie.

23. Use according to any of claim 20 to 22 wherein the fruit disc according is placed on top of said food composition in a frozen state.
